(19)

Europäisches
Patentamt
European
Patent Office
Office européen
des brevets

(11) **EP 3 896 620 A1**

(12) **EUROPEAN PATENT APPLICATION**

(43) Date of publication:
20.10.2021 Bulletin 2021/42

(51) Int Cl.:
*G06N 5/00* (2006.01)   *G06N 5/02* (2006.01)

(21) Application number: 20169776.0

(22) Date of filing: 16.04.2020

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: **Robert Bosch GmbH**
**70442 Stuttgart (DE)**

(72) Inventor: **Kharlamov, Evgeny**
**81829 Muenchen (DE)**

(54) **METHOD AND SYSTEM FOR KEYWORD SEARCH OVER A KNOWLEDGE GRAPH**

(57)   Computer implemented method (100) for enhancing a knowledge graph (KG) with labels, wherein a knowledge graph (KG) comprises a large number of vertices (V) representing entities and a large number of edges (E) representing relations between said entities, wherein the method comprises a step (110) of determining a label (L) for each vertex (V), wherein the label (L) of each vertex (V) comprises a list of distances between said particular vertex (V) and other vertices (V) of the knowledge graph (KG), wherein the distances are sorted in descending order with regard to betweenness centrality (bc) of the vertices (V), starting with a distance to a vertex (V) with the highest number of edges (E) pointing in and out of said vertex (V).

Fig. 2

EP 3 896 620 A1

**Description**

Background

The disclosure concerns a computer implemented method and a system for enhancing a knowledge graph with labels. Further, the disclosure concerns the use of said method and/or said system in a method and/or in a system for keyword search over a knowledge graph.

Keyword search allows users to query data without a prior knowledge of specialized query languages. A keyword query is a set of words posed by the user that should be matched to the data. Relevant data fragments are then extracted and presented to the user in an appropriate format as answers. The exact way of matching keywords, extracting data, and composing answers depends on the format of the underlying data and the semantics of query answering.

Knowledge graphs are mainly used for graph-based knowledge representation by describing (real world) entities and their relations. A knowledge graph comprises a large number of vertices representing the entities and a large number of edges representing the relations between the entities.

A common type of semantics for keyword queries over graph data is to match each keyword to a vertex of the graph and to extract trees of minimum weight that contain these vertices, known as minimum-weight Steiner trees as described in Stefan Voß. 1992. Steiner's Problem in Graphs: Heuristic Methods. Discr. Appl. Math. 40, 1 (1992), 45-72.

In an edge-weighted data graph and a keyword query, one firstly finds for each keyword the matching set of vertices in the graph, i.e., all the vertices where the keyword can be matched, and then finds a tree in the graph that spans the matching sets, i.e., contains at least one vertex from each matching set, and that minimizes the total edge weight. This optimization problem is the well-known group Steiner tree (GST) problem as described in Stefan Voß. 1992. Steiner's Problem in Graphs: Heuristic Methods. Discr. Appl. Math. 40, 1 (1992), 45-72. Keywords are also allowed to be matched to edges. Edge matches can be straightforwardly transformed into vertex matches via graph subdivision, and be processed as vertex matches.

Computing answers to keyword queries under the GST semantics is computationally demanding. Moreover, existing approximation algorithms that have provable quality guarantees also have prohibitively high run time for large graphs. Knowledge graphs have become increasingly popular in recent years, and they can be huge. The goal of the present disclosure is to provide efficient keyword search systems and methods over knowledge graphs.

Disclosure of the invention

This is achieved by the device and methods according to the independent claims.

According to an embodiment a computer implemented method for enhancing a knowledge graph with labels, wherein a knowledge graph comprises a large number of vertices representing entities and a large number of edges representing relations between said entities, wherein the method comprises a step of determining a label for each vertex, wherein the label of each vertex comprises a list of distances between said particular vertex and other vertices of the knowledge graph, wherein the distances are sorted in descending order with regard to betweenness centrality of the vertices, starting with a distance to a vertex with the highest number of edges pointing in and out of said vertex.

The labels are offline constructed index structure and can therefore be called static labels.

The betweenness centrality bc of a vertex v is defined as

$$bc(v) = \sum_{s,t \in V \setminus \{v\}} \frac{\sigma_{st}(v)}{\sigma_{st}},$$

where $\sigma_{st}$ is the number of shortest paths between vertices s and t, and $\sigma_{st}(v)$ is the number of the paths $\sigma_{st}$ that pass through the vertex v. The betweenness centrality can be computed using the Brandes algorithm as described in Ulrik Brandes: 2001, A faster algorithm for betweenness centrality, J. Math. Soc. 25, 2 (2001), 163-177. However, for large graphs the Brandes algorithm can cause high run times. Therefore, the use of a source sampling based approximation algorithm and starting with a vertex with the highest number of edges pointing in and out of said vertex has proved to be advantageous. Further details of this algorithm are described in Ziyad AlGhamdi, Fuad Jamour, Spiros Skiadopoulos, and Panos Kalnis, 2017: A Benchmark for Betweenness Centrality Approximation Algorithms on Large Graphs, https://doi.org/10.1145/3085504.3085510.

The further processing of labels will be faster if vertices have smaller materialized labels. A known implementation of a heuristic method for constructing reasonably small labels for a given graph is for example the pruned landmark labelling (PLL), as described in Takuya Akiba, Yoichi Iwata, and Yuichi Yoshida, 2013: Fast exact shortest-path distance queries on large networks by pruned landmark labelling, 349-360, https://doi.org/10.1145/2463676.2465315, which performs the Dijkstra algorithm and effectively prunes searches to reduce labels. The computer implemented method according to the disclosure improves the pruned landmark labelling (PLL) to obtain smaller labels and hence provides faster processing of the labels.

According to an embodiment, the distance between a pair of vertices is the sum of weights of the edges connecting the pair of vertices. Weights are non-negative real numbers mapped to edges using a weighting function. For example, small weights indicate great importance and high weights indicate a low importance.

According to an embodiment, the method comprises further a step for computing distances between vertices of the knowledge graph. The distance between a pair of vertices can be computed by summing up the weights of the edges connecting the pair of vertices.

According to an embodiment, a distance is computed by computing the smallest distance between a pair of vertices.

According to an embodiment, the label of each vertex comprises further information on the predecessors of the vertex. Each adjacent vertex of the vertex gives a predecessor of a vertex. Storing the predecessors does not increase the asymptotic space complexity of the static labels.

The disclosure concerns further a computer program for enhancing a knowledge graph with labels, wherein the computer program comprises computer readable instructions that when executed by a computer cause the computer to execute a method for enhancing a knowledge graph with labels according to the embodiments. Advantageously, the computer program comprises instructions that when executed by a computer cause the computer to execute a step of determining a label for each vertex, wherein the label of each vertex comprises a list of distances between said particular vertex and other vertices of the knowledge graph, wherein the distances are sorted in descending order with regard to betweenness centrality of the vertices, starting with a distance to a vertex with the highest number of edges pointing in and out of said vertex.

Advantageously, the computer program comprises instructions that when executed by a computer cause the computer to execute a step of computing distances between vertices of the knowledge graph.

The disclosure concerns further a system for enhancing a knowledge graph with labels, wherein the system comprises at least one memory unit for storing said knowledge graph and/or least one memory unit for storing a computer program, wherein said computer program controls the execution of a method for enhancing a knowledge graph with labels according to the embodiments. The system can be configured to access distributed storing units.

The labels of the knowledge graph may be stored in the same storing unit as the knowledge graph. According to an embodiment, the system comprises further a memory unit for storing the labels.

The disclosure concerns further a method for keyword search over a knowledge graph, wherein the knowledge graph comprises a large number of vertices representing entities and a large number of edges representing relations between said entities, and the knowledge graph is enhanced with labels by using a method for enhancing a knowledge graph with labels according to the embodiments and/or a system for enhancing a knowledge graph with labels according the embodiments and/or a computer program for enhancing a knowledge graph with labels according to the embodiments, wherein the method for keyword search comprises the steps of receiving a set of keywords and determining a subgraph for the set of keywords, wherein the step of determining the subgraph comprises: mapping keywords of the set of keywords to vertices of the knowledge graph, and determining the shortest path between each pair of said vertices based on the labels of the vertices, such that the subgraph of the knowledge graph is minimal with regard to distances between said vertices.

The labels are constructed offline and are therefore invariant to the search queries.

According to an embodiment, the step of determining the shortest path between a pair of vertices comprises determining common vertices for the pair of vertices by using the information on predecessors of the vertices in the labels.

According to an embodiment, the step of determining the shortest path between each pair of vertices comprises repeatedly following the predecessors stored in the labels of the vertices.

According to another embodiment, the method can be advantageously extended to support edge matches by mapping keywords of the set of keywords to edges of the knowledge graph.

According to an embodiment, edges are transformed into vertices using graph sub division. The subdivision of an edge yields a new vertex and replaces the edge by two new edges. In this way, edge matches are transformed into vertex matches. Advantageously, the steps described with regard to mapping keywords to vertices can be performed with regard to edges.

The disclosure concerns further a computer program for keyword search over a knowledge graph, wherein the computer program comprises computer readable instructions that when executed by a computer cause the computer to execute a method for keyword search over a knowledge graph according to the embodiments.

Advantageously, the computer program comprises instructions that when executed by a computer cause the computer to execute any of the steps of receiving a set of keywords and determining a subgraph for the set of keywords, wherein the step of determining the subgraph comprises: mapping keywords of the set of keywords to vertices of the knowledge graph, and determining the shortest path between each pair of said vertices based on the labels of the vertices, such that the subgraph of the knowledge graph is minimal with regard to distances between said vertices.

Advantageously, the computer program comprises instructions that when executed by a computer cause the computer to execute the step of determining common vertices for the pair of vertices by using the information on predecessors of the vertices in the labels.

Advantageously, the computer program comprises instructions that allows extending the method to support edge matches.

The disclosure concerns further a system for keyword search over a knowledge graph, wherein the system is configured to execute a method for keyword search over a knowledge graph according to the embodiments.

According to an embodiment, the system for keyword search over a knowledge graph comprises at least one memory unit for storing a set of keywords and/or least one memory unit for storing a computer program for keyword search over a knowledge graph, wherein said computer program PRG 2 controls the execution of the method for keyword search over a knowledge graph according to the embodiments.

Advantageously, the system comprises a storing unit for storing a knowledge graph and/or a storing unit for storing a computer program for keyword search over a knowledge graph according to the embodiments.

Further advantageous embodiments are derived from the following description and the drawings. In the drawings

Fig. 1    depicts a schematic view of a computer implemented method for enhancing a knowledge graph with labels according to an embodiment;

Fig. 2    depicts a schematic view of a knowledge graph;

Fig. 3    depicts a schematic view of a system for enhancing a knowledge graph with labels according to an embodiment;

Fig. 4    depicts a schematic view of a computer implemented method for keyword search over a knowledge graph according to an embodiment, and

Fig. 5    depicts a schematic view of a system for keyword search over a knowledge graph according to an embodiment.

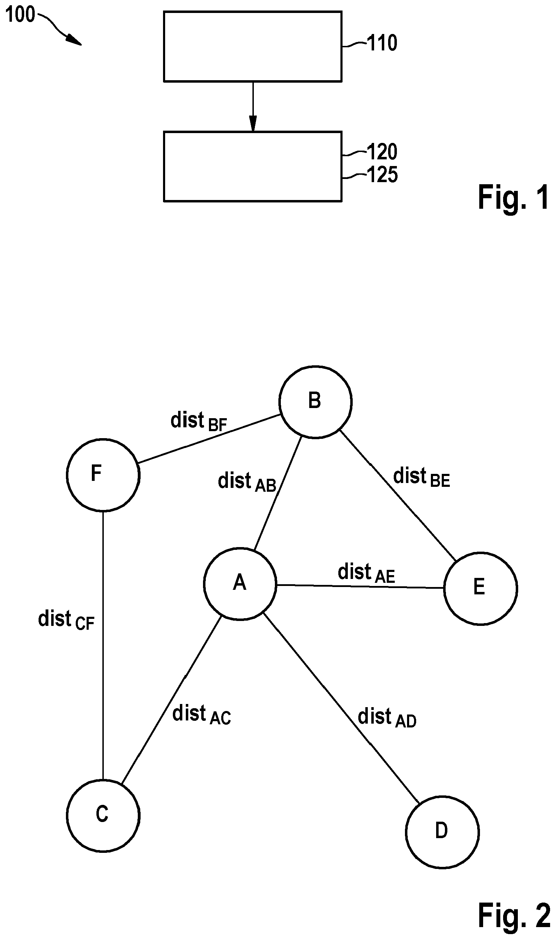

Figure 1 refers to a computer implemented method 100 for enhancing a knowledge graph with labels. An exemplary presentation of a knowledge graph KG is given by figure 2. The knowledge graph KG can be used for graph-based knowledge representation by describing (real world) entities and their relations. The knowledge graph KG comprises a large number of vertices V representing the entities and a large number of edges E representing the relations between said entities.

According to an embodiment, the method 100 for enhancing the knowledge graph KG with labels L comprises a step 110 of determining a label L for each vertex V, wherein the label L of each vertex V comprises a list of distances between said particular vertex V and other vertices V of the knowledge graph KG.

As shown in figure 2, the knowledge graph KG comprises vertices A, B, C, D, E and F. The distance between the vertices are for example $dist_{AB} = 0.6$, $dist_{AC} = 0.4$, $dist_{AD} = 1$, $dist_{AE} = 0.3$, $dist_{BE} = 0.8$, $dist_{BF} = 0.1$ and $dist_{CF} = 2$.

The following table gives an exemplary presentation of labels L:

| L(A) | A (dist=0, pred=A) |
|---|---|
| L(B) | A (dist=0.6, pred=A), B (dist=0, pred=B) |
| L(C) | A (dist=0.4, pred=A), C (dist=0, pred=C) |
| L(D) | A (dist=1, pred=A), D (dist=0, pred=D) |
| L(E) | A (dist=0.3, pred=A), B (dist=0.8, pred=B), E (dist=0, pred=E) |
| L(F) | A (dist=0.7, pred=B), B (dist=0.1, pred=B), F (dist=0, pred=F) |

The distances are sorted in descending order with regard to betweenness centrality of the vertices, starting with a distance to a vertex with the highest number of edges pointing in and out of said vertex.

The betweenness centrality bc of a vertex v is defined as

$$bc(v) = \sum_{s,t \in V\backslash\{v\}} \frac{\sigma_{st}(v)}{\sigma_{st}},$$

where $\sigma_{st}$ is the number of shortest paths between vertices s and t, and $\sigma_{st}(v)$ is the number of the paths $\sigma_{st}$ that pass through the vertex v. According to the disclosure, the betweenness centrality is using a source sampling based approximation algorithm and starting with a vertex with the highest number of edges pointing in and out of said vertex. Further details of this algorithm are described in Ziyad AlGhamdi, Fuad Jamour, Spiros Skiadopoulos, and Panos Kalnis, 2017: A Benchmark for Betweenness Centrality Approximation Algorithms on Large Graphs, https://doi.org/10.1145/3085504.3085510.

According to an embodiment, the distance between a pair of vertices is the sum of weights of the edges E connecting the pair of vertices V. Weights are non-negative real numbers mapped to edges E using a weighting function. For example, small weights indicate great importance and high weights indicate a low importance.

According to an embodiment, the method comprises further a step 120 for computing distances between vertices V of the knowledge graph KG. The distance between a pair of vertices V can be computed by summing up the weights of the edges E connecting the pair of vertices V.

According to an embodiment, a distance is computed by computing 125 the smallest distance between a pair of vertices V.

According to an embodiment, the label L of each vertex V comprises further information on the predecessors of the vertex V. Each adjacent vertex V of a specific vertex V gives a predecessor of a vertex V.

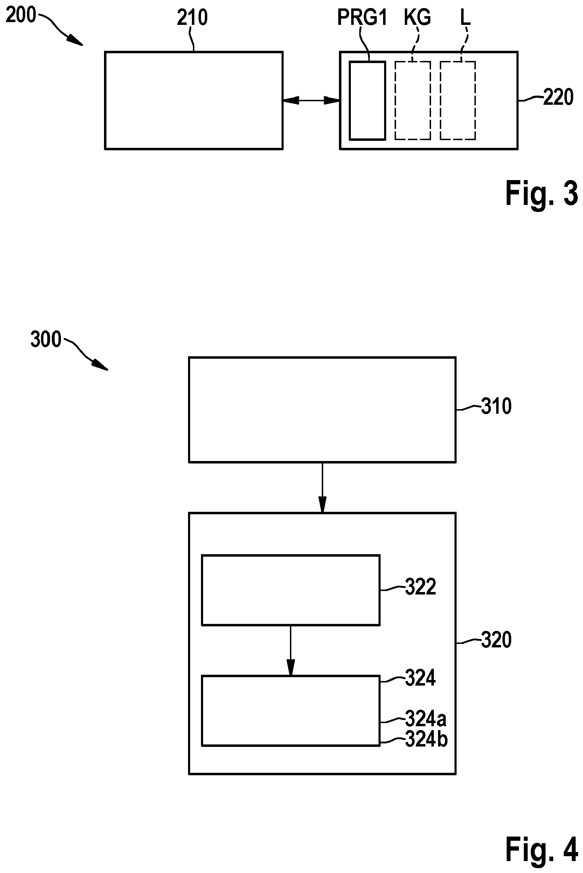

Figure 3 depicts a schematic view of a system 200 for enhancing a knowledge graph KG with labels L according to an embodiment.

The system 200 is configured to carry out at least the steps 110, 120 and 125 of the method 100.

The system 200 comprises a computing unit 210, e.g. a microprocessor and/or microcontroller and/or programmable logic device, in particular FPGA, and/or application-specific integrated circuit, ASIC, and/or digital signal processor, DSP, and/or a combination thereof.

The system 200 comprises at least one storing unit 220. The storing unit 220 may further comprise a volatile memory, in particular random access memory (RAM), and/or a non-volatile memory, e.g. a flash EEPROM. The storing unit 220 contains at least one computer program PRG1 for the computing unit 210, which controls the execution of the method 100 for enhancing the knowledge graph KG with labels L according to the embodiments and/or any other operation of the system 200.

The system 200 may further comprise an interface unit 230 for receiving data constituting the knowledge graph KG from at least one external data source. The data constituting the knowledge graph can be stored in the storing unit 220 of the system or in a further, for example an external, storing unit.

According to an embodiment, the labels L are stored in the same storing unit as the knowledge graph KG, for example in the storing 220 or in an external storing unit. According to another embodiment, the labels L are stored in a separate storing unit.

The computer program PRG1 advantageously comprises computer readable instructions that when executed by a computer, preferably the computing unit 210, cause the computer to execute the method 100 for enhancing a knowledge graph with labels according to the embodiments. Advantageously, the computer program PRG1 comprises instructions that when executed by a computer cause the computer to execute the step 110 of determining a label L for each vertex V of the knowledge graph KG, wherein the label L of each vertex V comprises a list of distances between said particular vertex V and other vertices V of the knowledge graph KG, wherein the distances are sorted in descending order with regard to betweenness centrality of the vertices V, starting with a distance to a vertex V with the highest number of edges E pointing in and out of said vertex V.

Advantageously, the computer program PRG1 comprises instructions that when executed by a computer cause the computer to execute the step 120 of computing distances between vertices V of the knowledge graph KG.

Figure 4 depicts a schematic view of a computer implemented method 300 for keyword search over the knowledge graph KG according to another embodiment of the disclosure. Keyword search allows users to query data without a prior knowledge of specialized query languages. A keyword query is a set of words posed by the user that should be matched to the data.

According to an embodiment, the knowledge graph KG is enhanced with labels L by using the method 100 for enhancing the knowledge graph KG with labels L according to the above described embodiments and/or the system 200 for enhancing the knowledge graph KG with labels L according to the above described embodiments and/or the computer program PRG 1 for enhancing the knowledge graph KG with labels L according to the above described embodiments.

According to figure 4 the method 300 comprises
a step 310 of receiving a set of keywords and
a step 320 of determining a subgraph for the set of keywords.

According to the embodiment the step 320 of determining the subgraph comprises
a step 322 of mapping keywords of the set of keywords to vertices V of the knowledge graph KG, and
a step 324 of determining the shortest path between each pair of said vertices V based on the labels L of the vertices

V, such that the subgraph of the knowledge graph KG is minimal with regard to distances between said vertices V.

According to the embodiment, the step 324 of determining the shortest path between a pair of vertices V comprises determining 324a common vertices V for the pair of vertices V by using the information on predecessors of the vertices V in the labels L.

According to the embodiment, the step 324 of determining the shortest path between each pair of vertices V comprises repeatedly following 324b the predecessors stored in the labels L of the vertices V.

According to an embodiment, the method 300 may further comprise mapping keywords of the set of keywords to edges E of the knowledge graph KG. According to an embodiment, edges E are transformed into vertices V using graph sub division. The subdivision of an edge E yields a new vertex V and replaces the edge E by two new edges E. In this way, edge matches are transformed into vertex matches. Advantageously, the steps 320, 322, 324, 324a, 324b of the method 300, described with regard to mapping keywords to vertices V can be performed with regard to edges E.

The method 300, in particular the steps 324, 324a and 324b, is described below exemplarily with regard to figure 2.

The knowledge graph KG is extended with labels L, as shown in above table.

To obtain a shortest path (step 324) between two vertices V, firstly the common vertex V between these two vertices V is determined (step 324a) and secondly the predecessors of the two vertices V are followed to construct the part from one vertex V to the common vertex V and to construct the part from the other vertex V to the common vertex V.

For example, to compute the shortest path between vertices D and F, A is determined as common vertex between D and F. This information can be obtained from the labels of the vertices D and D. A is the only common vertex in L(D) and L(F). The D-A part of the path between D and F, the single edge (D,A), is constructed by following pred(D, A) = A which is stored with A in L(D). The F-A part of the path between D and F, the path consisting of two edges (F, B) and (B,A), is constructed by following pred(F,A) = B which is stored with A in L(F) and then following pred(B,A) = A which is stored with A in L(B). Finally, the two parts are concatenated into the shortest path between D and F, which is p = D-A-B-F.

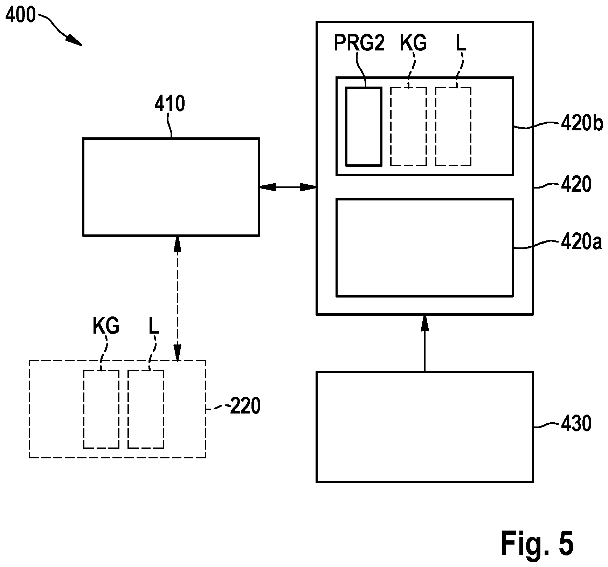

Figure 5 depicts a schematic view of a system 400 for keyword search over the knowledge graph KG according to an embodiment.

The system 400 is configured to carry out at least the steps 310, 320 of the method 300.

The system 400 comprises a computing unit 410, e.g. a microprocessor and/or microcontroller and/or programmable logic device, in particular FPGA, and/or application-specific integrated circuit, ASIC, and/or digital signal processor, DSP, and/or a combination thereof.

The system 400 comprises at least one storing unit 420. The storing unit 420 may further comprise a volatile memory 420a, in particular random access memory (RAM), and/or a non-volatile memory 420b, e.g. a flash EEPROM. The non-volatile memory 420b contains at least one computer program PRG2 for the computing unit 410, which controls the execution of the method 300 for keyword search over the knowledge graph KG according to the embodiments and/or any other operation of the system 400.

The system 400 may further comprise an interface unit 430 for receiving data constituting the set of keywords. The set of keywords can be stored in said volatile memory 420a of said storing unit 420.

The system 400 may further comprise a storing unit for storing the knowledge graph KG and/or the labels L of the knwoledge graph KG. According to another embodiment the system 400 is configured to access a storing unit comprising the knowledge graph KG and/or labels L of the knowledge graph KG, for example an external storing unit. The external storing unit is for example the storing unit 220 of the system 200 as depicted in figure 3.

The computer program PRG2 for keyword search over the knowledge graph KG, comprises computer readable instructions that when executed by a computer, preferable the computing unit 410 of the system 400, cause the computer to execute the method 300 for keyword search over a knowledge graph KG according to the above described embodiments.

Advantageously, the computer program PRG2 comprises instructions that when executed by a computer cause the computer to execute any of the steps of receiving 310 a set of keywords and determining 320 a subgraph for the set of keywords, wherein the step 320 of determining the subgraph comprises: mapping 322 keywords of the set of keywords to vertices V of the knowledge graph KG, and determining 324 the shortest path between each pair of said vertices V based on the labels L of the vertices V, such that the subgraph of the knowledge graph KG is minimal with regard to distances between said vertices V.

Advantageously, the computer program PRG2 comprises instructions that when executed by a computer cause the computer to execute the step 324a of determining common vertices V for the pair of vertices V by using the information on predecessors of the vertices V in the labels L.

Advantageously, the computer program PRG2 comprises instructions that allows extending the method 300 to support edge matches.

**Claims**

1.  Computer implemented method (100) for enhancing a knowledge graph (KG) with labels, wherein a knowledge graph (KG) comprises a large number of vertices (V) representing entities and a large number of edges (E) representing relations between said entities, wherein the method comprises a step (110) of determining a label (L) for each vertex (V), wherein the label (L) of each vertex (V) comprises a list of distances between said particular vertex (V) and other vertices (V) of the knowledge graph (KG), wherein the distances are sorted in descending order with regard to betweenness centrality (bc) of the vertices (V), starting with a distance to a vertex (V) with the highest number of edges (E) pointing in and out of said vertex (V).

2.  Computer implemented method (100) according to claim 1, wherein the distance between a pair of vertices (V) is the sum of weights of the edges connecting the pair of vertices (V).

3.  Computer implemented method (100) according to any of the preceding claims, wherein the method (100) comprises further a step (120) for computing distances between vertices (V) of the knowledge graph (KG).

4.  Computer implemented method (100) according to any of the preceding claims, wherein a distance is computed by computing the smallest distance between a pair of vertices (V).

5.  Computer implemented method (100) according to any of the preceding claims, wherein the label (L) of each vertex (V) comprises further information on the predecessors of the vertex (V).

6.  Computer program (PRG 1) for enhancing a knowledge graph (KG) with labels (L), wherein the computer program (PRG 1) comprises computer readable instructions that when executed by a computer (210) cause the computer (210) to execute a method (100) for enhancing a knowledge graph (KG) with labels (L) according to any of claims 1 to 5.

7.  System (200) for enhancing a knowledge graph (KG) with labels (L), wherein the system (200) comprises at least one memory unit (220) for storing said knowledge graph (KG) and/or least one memory unit (220) for storing a computer program (PRG 1), wherein said computer program (PRG 1) controls the execution of the method (100) for enhancing a knowledge graph (KG) with labels (L) according to any of claims 1 to 5.

8.  System (200), according to claim 7, wherein the system (200) comprises further a memory unit (220) for storing the labels (L) of the vertices (V).

9.  Computer implemented method (300) for keyword search over a knowledge graph (KG), wherein the knowledge graph (KG) comprises a large number of vertices (V) representing entities and a large number of edges (E) representing relations between said entities, and the knowledge graph (KG) is enhanced with labels (L) by using a method (100) for enhancing a knowledge graph (KG) with labels (L) according to any of the claims 1 to 5 and/or a system (200) for enhancing a knowledge graph (KG) with labels (L) according to claims 7 or 8 and/or a computer program (PRG 1) for enhancing a knowledge graph (KG) with labels (L) according to claim 6,
    wherein the method (300) comprises the steps of receiving (310) a set of keywords and determining (320) a subgraph for the set of keywords, wherein the step (320) of determining the subgraph comprises:
    a step of mapping (322) keywords of the set of keywords to vertices (V) of the knowledge graph (KG), and a step (324) of determining the shortest path between each pair of said vertices (V) based on the labels (L) of the vertices (V), such that the subgraph of the knowledge graph (KG) is minimal with regard to distances between said vertices (V).

10. Computer implemented method (300), according to claim 9, wherein the step of determining (324) the shortest path between a pair of vertices (V) comprises determining (324a) common vertices (V) for the pair of vertices (V) by using the information on predecessors of the vertices (V) in the labels (L) of the vertices (V).

11. Computer implemented method (300) according to any of the preceding claims, wherein the step of determining (324) the shortest path between each pair of vertices (V) comprises repeatedly following (324b) the predecessors stored in the labels (L) of the vertices (V).

12. Computer implemented method (300) according to any of the preceding claims, wherein the method (300) further comprises mapping keywords of the set of keywords to edges (E) of the knowledge graph (KG).

13. Computer implemented method (300) according to claim 12, wherein edges (E) of the knowledge graph (KG) are transformed into vertices (V) using graph sub division.

14. Computer program (PRG 2) for keyword search over a knowledge graph (KG), wherein the computer program (PRG 2) comprises computer readable instructions that when executed by a computer (410) cause the computer (410) to execute a method (300) for keyword search over a knowledge graph (KG) according to any of claims 9 to 13.

15. System (400) for keyword search over a knowledge graph (KG), wherein the system (400) comprises at least one memory unit (420a) for storing a set of keywords and/or least one memory unit (420b) for storing a computer program (PRG 2), wherein said computer program (PRG 2) controls the execution of the method (300) for keyword search over a knowledge graph (KG) according to any of claims 9 to 13.

Fig. 1

Fig. 2

200

210

PRG1 KG L

220

**Fig. 3**

300

310

322

320

324

324a
324b

**Fig. 4**

400

410

PRG2  KG  L

420b

420

420a

430

220

KG  L

## Fig. 5

Europäisches
Patentamt

European
Patent Office

Office européen
des brevets

# EUROPEAN SEARCH REPORT

Application Number

EP 20 16 9776

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YE LI ET AL: "An experimental study on hub labeling based shortest path algorithms", PROCEEDINGS OF THE VLDB ENDOWMENT; [ACM DIGITAL LIBRARY], ASSOC. OF COMPUTING MACHINERY, NEW YORK, NY, vol. 11, no. 4, 1 December 2017 (2017-12-01), pages 445-457, XP058384822, ISSN: 2150-8097, DOI: 10.1145/3164135.3164141 | 1-8 | INV. G06N5/00 G06N5/02 |
| Y | * abstract * * sections 1.1, 2.1, 2.1.1, 3, 4.2, 4.3, 6 * | 9-15 | |
| Y | HAO HE ET AL: "BLINKS", PROCEEDINGS OF THE 2007 ACM SIGMOD INTERNATIONAL CONFERENCE ON MANAGEMENT OF DATA , SIGMOD '07, 1 January 2007 (2007-01-01), page 305, XP055218294, Beijing, China DOI: 10.1145/1247480.1247516 ISBN: 978-1-59-593686-8 * abstract * * sections 1, 3, 4.1, 5, 5.1, 5.2, 6.2 * | 9-15 | |
| A | DONG QING ET AL: "A Fast and Efficient Parallel Algorithm for Pruned Landmark Labeling", 2018 IEEE HIGH PERFORMANCE EXTREME COMPUTING CONFERENCE (HPEC), IEEE, 25 September 2018 (2018-09-25), pages 1-7, XP033457570, DOI: 10.1109/HPEC.2018.8547548 [retrieved on 2018-11-26] * the whole document * | 1-15 | TECHNICAL FIELDS SEARCHED (IPC)  G06N |

-/--

The present search report has been drawn up for all claims

| Place of search | Date of completion of the search | Examiner |
|---|---|---|
| The Hague | 1 October 2020 | Papadakis, Georgios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 20 16 9776

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DU MING ET AL: "$HT$ : A Novel Labeling Scheme for k-Hop Reachability Queries on DAGs", IEEE ACCESS, vol. 7, 28 November 2019 (2019-11-28), pages 172110-172122, XP011760584, DOI: 10.1109/ACCESS.2019.2956557 [retrieved on 2019-12-10] * the whole document * | 1-15 | |

-----

TECHNICAL FIELDS
SEARCHED (IPC)

The present search report has been drawn up for all claims

| Place of search | Date of completion of the search | Examiner |
|---|---|---|
| The Hague | 1 October 2020 | Papadakis, Georgios |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.................................................................

& : member of the same patent family, corresponding
    document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **STEFAN VOß.** Steiner's Problem in Graphs: Heuristic Methods. *Discr. Appl. Math.,* 1992, vol. 40 (1), 45-72
- **ULRIK BRANDES.** A faster algorithm for betweenness centrality. *J. Math. Soc.,* 2001, vol. 25 (2), 163-177
- **ZIYAD ALGHAMDI ; FUAD JAMOUR ; SPIROS SKIADOPOULOS ; PANOS KALNIS.** *A Benchmark for Betweenness Centrality Approximation Algorithms on Large Graphs,* 2017, https://doi.org/10.1145/3085504.3085510
- **TAKUYA AKIBA ; YOICHI IWATA ; YUICHI YOSHIDA.** *Fast exact shortest-path distance queries on large networks by pruned landmark labelling,* 2013, 349-360, https://doi.org/10.1145/2463676.2465315